(19) Europäisches Patentamt
European Patent Office
Office européen des brevets

(11) **EP 2 650 801 A1**

(12) **EUROPEAN PATENT APPLICATION**

(43) Date of publication:
**16.10.2013 Bulletin 2013/42**

(51) Int Cl.:
***G06F 17/30*** *(2006.01)*

(21) Application number: **12290130.9**

(22) Date of filing: **13.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Bouadjenek, Mohamed Réda**
**Route de Villejust**
**91620 Nozay (FR)**

• **Hacid, Hakim**
**Route de Villejust**
**91620 Nozay (FR)**

(74) Representative: **Croonenbroek, Thomas Jakob et al**
**Innovincia**
**11, avenue des Tilleuls**
**74200 Thonon-les-Bains (FR)**

Remarks:
Amended claims in accordance with Rule 137(2) EPC.

(54) **Method for retrieving and ranking indexed items**

(57)    The present invention refers to a computer-implemented method for retrieving and ranking indexed items of a communication network based on a query implemented in a server system having one or more processor and data repository, the said method comprising the following steps:
- receiving, from a user equipment (4) connected to the communication network, a query comprising at least one term (105),
- retrieving items stored in a data repository (1) of the server system that are indexed based on their textual contents and having at least one index corresponding to the at least one term of the query (109),
- weighting the retrieved items by taking into account a number of occurrences of the at least one term of the query in the retrieved items (110),
wherein the retrieving and weighting steps of the method also comprise:
- retrieving items stored in a data repository (1) of the server system that are indexed based on at least one social bookmark associated to the said items and having at least one index corresponding to the at least one term of the query (109),
- weighting the at least one social bookmark associated with a retrieved item by taking into account a number of occurrences of the at least one term of the query in the at least one social bookmark (110) and,
- ranking the retrieved items based on a combination of both weighting steps (111).

Fig.1

EP 2 650 801 A1

## Description

The present invention relates to the field of information retrieval systems more commonly called as search engines.

Search engines are useful for retrieving relevant items from a large collection of items. Conventional search engines often return results based on a ranking system. For example, conventional search engines sort items based on the contents and more particularly the textual content of the items, such as on the number of times a keyword or particular word or phrase appears in each item. Thus each item is associated with indexes corresponding to extracts of the textual content of the items.

Then, when a query is received from a user the conventional search engines retrieve the items associated with indexes that are similar to the query and a ranking is performed based on the level of similarities between the query and the retrieved items.

However, such conventional search engines may lead to a high number of irrelevant items for the user so that refinement of the query or post-filtering of the results is needed which can be burdensome and time consuming for the user.

In order to prevent such annoyance, search engines need to be improved by taking more parameters into account. However, the addition of parameters in the indexing or in the ranking of the items disclosed in the state of the art usually require huge computation capacities and are often impossible to implement.

## SUMMARY OF THE INVENTION

It is therefore an object of the present invention to overcome the above mentioned drawbacks of the state of the art and to provide an improved information retrieval system which is easily implementable.

Thus, the present invention refers to a computer- implemented method for retrieving and ranking indexed items of a communication network based on a query implemented in a server system having one or more processor and data repository, the said method comprising the following steps:

- receiving, from a user equipment connected to the communication network, a query comprising at least one term,
- retrieving items stored in a data repository of the server system that are indexed based on their textual contents and having at least one index corresponding to the at least one term of the query,
- weighting the retrieved items by taking into account a number of occurrences of the at least one term of the query in the retrieved items,

wherein the retrieving and weighting steps of the method also comprise:

- retrieving items stored in a data repository of the server system that are indexed based on at least one social bookmark associated to the said items and having at least one index corresponding to the at least one term of the query,
- weighting the at least one social bookmark associated with a retrieved item by taking into account a number of occurrences of the at least one term of the query in the at least one social bookmark and,
- ranking the retrieved items based on a combination of both weighting steps.

According to another aspect of he present invention, the at least one social bookmark associated with an item refers to at least one term which is associated to the item by a user of the communication network.

According to a further aspect of the present invention, the at least one social bookmark is a folksonomy.

According to an additional aspect of the present invention, it comprises a preliminary step of indexing items of a communication network, the said preliminary step comprising a first and a second independent indexings wherein the first indexing refers to an indexing of the items based on their textual contents and the second indexing refer to an indexing of the items based on the social bookmarks associated with the items.

According to another aspect of the present invention, it comprises an additional step of enrichment of the query after the step of reception of a query wherein additional terms corresponding to terms having a spelling close to the spelling of the at least one term of the initial query or terms that are synonyms with the at least on term of the initial query are added to the query.

According to a further aspect of the present invention, the weighting step is performed using a vectorial space model wherein the query and the indexed items are represented by vectors.

According to an additional aspect of the present invention, the vectors of the vectorial space model are determined by a term-frequency, inverse item frequency "tf-idf" technique.

According to another aspect of the present invention, the step of ranking comprises the establishment of a first and a second pre-rankings of the retrieved items according respectively to the weighting based on the items indexed by their textual content and to the weighting based on the social bookmarks, the said first and second pre-rankings comprising the computation, for the items, of an similarity parameter between the query and an indexed item, the said similarity parameter corresponding to the cosine between the vector representing the query and a vector representing the indexed item.

According to a further aspect of the present invention, the step of ranking comprises the computation of a global similarity parameter based on the similarity parameters computed during the first and the second pre-rankings using a weighted Borda-Fuse equation.

According to another aspect of the present invention, the communication network is the Internet and wherein an item refers to a web page.

The embodiments of the present invention also refer to a server system of a communication network comprising

- an index repository for storing indexes associated with items of the communication network,
- a user interface configured for receiving a query comprising at least one term from a user equipment of the communication network,
- processing means configured to perform the steps of:

    - browsing the index repository and retrieving the indexed items having at least one index corresponding to at least one term of the query,
    - weighting the retrieved items by taking into account a number of occurrences of the at least one term of the query in the said retrieved items,

    wherein the index repository comprises two types of indexing, a first indexing based on the textual contents of the items and a second indexing based on social bookmarks associated with the items and wherein the processing means are configured for:

    - browsing the index repository and retrieving the indexed items having at least one index corresponding to the at least one term of the query according to the first and the second indexing,
    - weighting the items retrieved by the first indexing by taking into account a number of occurrences of the at least one term of the query in the items retrieved by the first indexing,
    - weighting the items retrieved by the second indexing by taking into account a number of occurrences of the at least one term of the query in the social bookmarks associated with the items retrieved by the second indexing,
    - ranking the retrieved items based on a combination of both weightings.

According to another aspect of the present invention, the user interface is also configured for transmitting the ranking of the retrieved items to the user equipment having sent the query.

According to a further aspect of the present invention, the processing means are also configured to perform the steps of:

- indexing items of the communication network based on their textual contents in the index repository,
- indexing items of the communication network based on the social bookmarks associated with the said items in the index repository.

**BRIEF DESCRIPTION OF THE DRAWINGS**

FIG.1 is a diagram of the functional elements and the different steps according to the embodiments of the present invention;

FIG.2 is a diagram representing the different documents of a communication network wherein social bookmarks have been associated with the documents by three users;

FIG.3 is a chart representing the association between the indexes extracted from the textual context of the documents and the documents;

FIG.4 is a chart representing the association between the indexes extracted from the social bookmarks associated with the documents and the documents;

FIG.5 is a chart of the vectors and their associated weightings in the space associated with the textual content;

FIG.6 is a chart of the vectors and their associated weightings in the space associated with the social bookmarks;

**DETAILED DESCRIPTION OF THE INVENTION**

As used herein, the term "folksonomy" refers to a tag in a system of classification derived from the practice and method of collaboratively creating and managing tags to annotate and categorize contents. This practice is also known as collaborative tagging, social classification, social indexing or social tagging.

The embodiments of the present invention refer to a method for retrieving and ranking indexed items of a communication network, i.e. the Internet using a server system wherein the indexing, the retrieval and the ranking are performed using on one side the items content and on the other side the social bookmarks associated with the items.

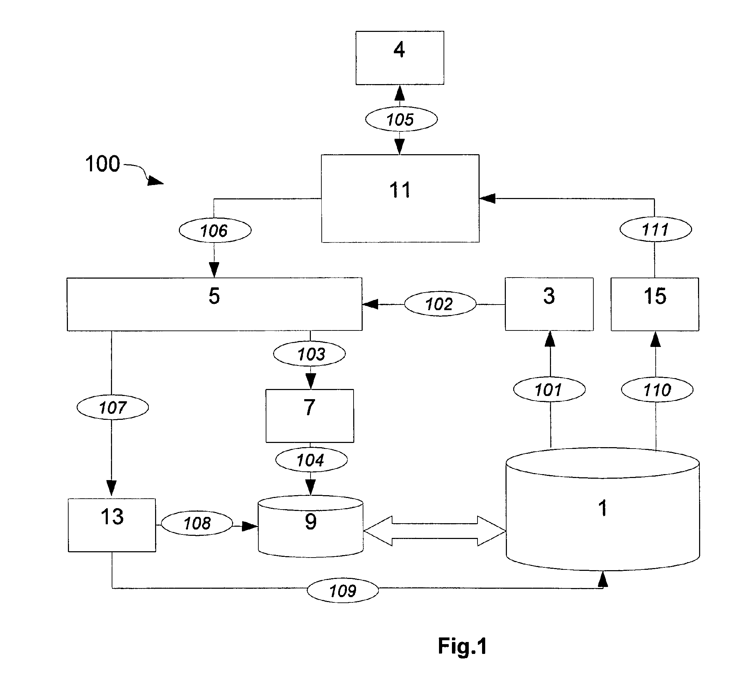

Fig. 1 represents the functional elements numbered from 1 to 15 of a search engine 100 implemented in a server system and the different steps numbered from 101 to 111 performed by these elements for processing a user query and retrieving information corresponding to this query.

The search engine 100 comprises an item database or item repository 1 which gathers the items that are accessible by the search engine 100. These items refer to any content that can be found on the Internet, i.e. any web pages.

The step 101 refers to the extraction of these items by a data extractor 3. Furthermore, the social bookmarks associated with these items are also extracted. The social bookmarks are terms which are added and associated to the items by a user of the communication network who can be any user of the network. These social bookmarks are folksonomies, i.e. tags that are associated to items by any users of the communication network allowing a collaborative tagging of the items. These social bookmarks refer for example to tags created in websites dedicated to collaborative classification also called social bookmarking websites, comments or annotations added by a user on a web page, anchor text referring to an item or a search query associated with the item. In step 102, the extracted items and social bookmarks are transmitted to a text management unit 5.

The step 103 refers to the indexing by an indexing engine 7 of the extracted items and social bookmarks. This indexing is performed independently for the textual content of the items and for the social bookmarks. In the indexing based on the textual content, an item is associated with indexes that are words or expressions representative of the textual content of the item. In the same way the indexing of the social bookmarks refer to the association of indexes that are representative of the text of the social bookmarks. Thus, a first set of indexes is associated to the textual content of an item and another set of indexes is associated with the social bookmarks associated with the item. In step 104, the created indexes are stored in an index database or index repository 9. Alternatively, two different index repositories may also be used, one for each type of index.

The step 105 refers to the reception of a query comprising at least one term, for example a word, a sentence or an expression, at a user interface 11. The query comes from a remote user equipment 4. In step 106, the query is transmitted to the text management unit 5.

The step 107 is an optional step that refers to the enrichment of the query. This enrichment corresponds to the introduction of additional terms in the query to enlarge the scope of the query. These additional terms may be terms having a close spelling, for example if a term of the query has no identical index but one or several indexes differ only of one letter, the search engine may interpret the term as being a term corresponding to an index and that is different of a maximum predetermined number of letters from the term of the query in order to overcome the issues linked to a wrong spelling of the user. This maximum number of letter may be different in function of the number of letter of the term of the query. The search engine may also determine the index terms having the closest similarity with the term of the query. The query may also be enriched by terms that are synonym with an initial term of the query. The enriched query is then transmitted to searching functions 13.

The step 108 refers to the browsing by the searching functions 13 of the indexes of the index database 9 according to the query terms in order to select the indexes that match a term of the query. A first browsing is performed on the indexes created based on the textual content of the items and a second browsing is performed on the indexes created based on the social bookmarks.

The step 109 refers to the retrieval, from the item database 1, of the items associated with the indexes selected in step 108, that is to say, the retrieval of the items having at least one index corresponding to a term of the query.

The step 110 refers to the weighting of the items retrieved in step 109 by a ranking unit 15. This weighting step refers to the attribution of a weighting to each item. This weighting is computed notably based on the number of occurrences of a term of the query within the textual content of the item on one side and within the social bookmarks on the other side.

The step 111 refers to the establishment, by the ranking unit 15, of the ranking of the items based on the weightings achieved in step 110. The ranking can be divided into three substeps, a first pre-ranking of the items comprising the computation of a similarity parameter between the items and the query based on the weighting computed based on the textual content of the items, a second pre-ranking of the items comprising the computation of a similarity parameter between the items and the query based on weighting computed based on the social bookmarks and a computation of a global similarity parameter combining the first and the second pre-ranking leading to a final ranking. The obtained final ranking is then transmitted to the user interface to be sent to the remote user equipment 4 having sent the query.

Thus, by processing the textual content of the items and the social bookmarks associated with the items independently and by combining the results of both computations at the end, the method described herein enables to take into account the social bookmarks in the items retrieval without introducing too much computation complexity.

The steps 110 and 111 concerning the weighting and ranking will now be described in more details.

The embodiments of the present invention are based on a vectorial space model where the query and the items are mapped as vectors in a common term space corresponding to the space of the indexes. The coordinates of the vectors are determined based on the weightings assigned to the indexes of an item. According to an embodiment of the present invention, these weightings are based on a term-frequency, inverse document frequency (tf-idf) technique. However, any other techniques such as a simple term frequency or the Okapi BM25 method may also be used.

The tf-idf technique refers to a technique wherein the weighting given to a term (corresponding to an index that matches with a term of the query) is increased with the number of occurrences of the term in an item or document and decreased with the number of items or documents in which the term appears. The weighting given to a term that does not appear in the query is zero.

Thus, in the present case, there are two different term spaces, one corresponding to the space of the indexes obtained from the textual content of the items and the other corresponding to the space of the indexes obtained from the social bookmarks.

The similarity between the retrieved documents is determined by the computation of a similarity parameter corresponding to the cosine between the vector representing an item and the vector representing the query. The equation of the similarity parameter s between a vector i representing an item and a vector q representing a query is given by:

$$s(\vec{i},\vec{q}) = \frac{\vec{i} \cdot \vec{q}}{|\vec{i}| \times |\vec{q}|} \qquad [1]$$

The value of such parameter is comprised between 0 and 1, the 0-value corresponding to the absence of similarities and the 1-value corresponding to a perfect similarity.

Thus, for each item, two similarity parameters are obtained, one based on the textual content of the item and one based on the social bookmarks associated with the item, leading to a first and a second pre- ranking. These two parameters are then combined to obtained a global similarity parameter. This global similarity parameter S between an item I and a query Q is obtained using a weighted Borda- Fuse equation:

$$S(I,Q) = \gamma * s(\vec{q_t},\vec{i_t}) + (1-\gamma) * s(\vec{q_b},\vec{i_b}) \qquad [2]$$

where the vectors $q_t$ et $i_t$ represent the query and the item in the space of the indexes obtained from the textual content of the items, the vectors $q_b$ et $i_b$ represent the query and the item in

the space of the indexes obtained from the social bookmarks and γ a weighting parameter comprised between 0 and 1 used to set the relative contribution of the similarity parameter obtained based on the social bookmarks in the final ranking of the items. Besides it has to be noted that other ways may be used for the combination such as a simple sum.

The different steps described previously are provided through the use of a dedicated hardware as well as hardware capable of executing software in association with appropriate software dedicated to the item indexing, retrieval and ranking located in a server system. The server system comprises processing means provided, for example, by a processor. In such case, the processing means may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardwares, conventional and/or custom, may also be included. The storage means and database used in the server system could be any kind of data repository in any kind of memory , e.g. at least one RAM or ROM, or the like, or any combination thereof, e.g. one ROM and two RAMs, or two disks...

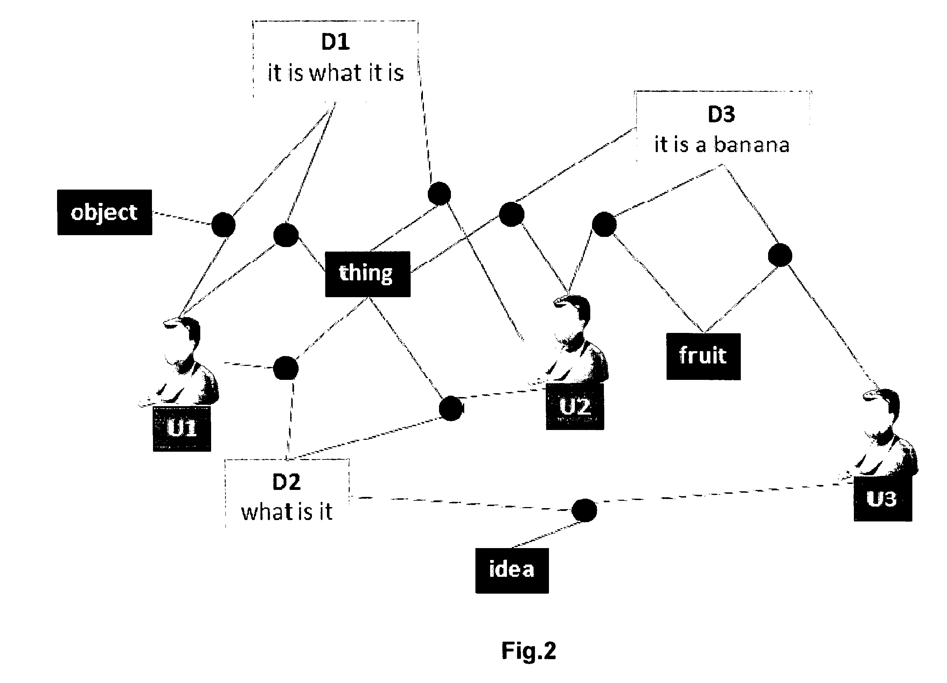

In order to better understand the present invention, an example of a processing of a query will now be described based on the diagram of fig.2 in a communication network comprising three items or documents noted D1, D2 and D3, three users noted U1, U2 and U3 and four social bookmarks corresponding to the terms "fruit", "thing", "object" and "idea". These social bookmarks are for example categories of a social bookmarking website. The association between the social bookmarks and the documents made by the users are represented by the dots at the edge of the lines. The user U1 has associated the social bookmark "object" with the document D1 and the social bookmark "thing" to the document D1 and D2. The user U2 has associated the social bookmark "thing" with the documents D1, D2 and D3 and the social bookmark "fruit" with the document D3. The user U3 has associated the social bookmark "fruit" with the document D3 and the social bookmark "idea" with the document D2. The textual content of document D1 is "it is what it is", the textual content of the document D2 is "what is it" and the textual content of the document D3 is "it is a banana".

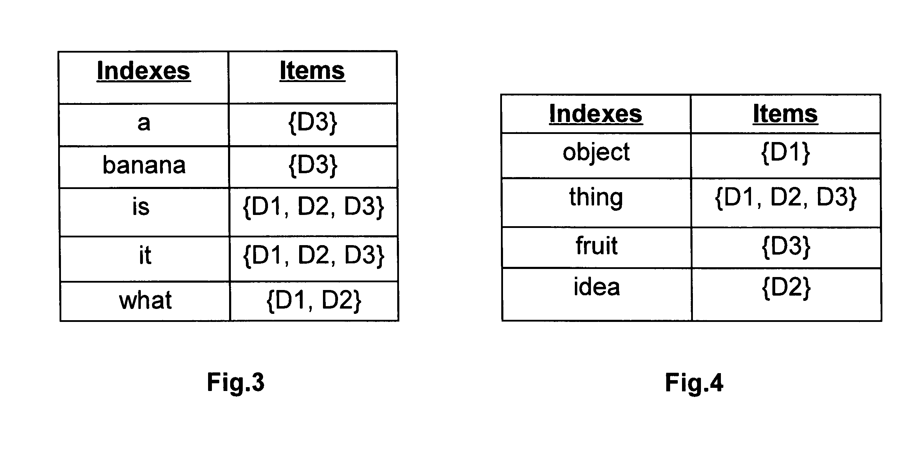

The indexing obtained by the search engine based on the textual content of the document is represented by the chart of fig.3.

The first column represents the indexes that correspond to all the terms written in the documents D1, D2 and D3 and the second column the items or documents associated with the indexes of the first column.

In the same way, the indexing obtained based on the social bookmarks is represented by the chart of fig.4. The first column represents the indexes that correspond to all the terms written in the social bookmarks and the second column the items or documents associated with the indexes of the first column.

A query comprising the terms "what is thing" is then received at the user interface 11 of the search engine.

The processing of the request starts with the computation of the weightings of the indexes of each item or document and the weightings of the terms of the query in the space of the indexes associated with the textual content.

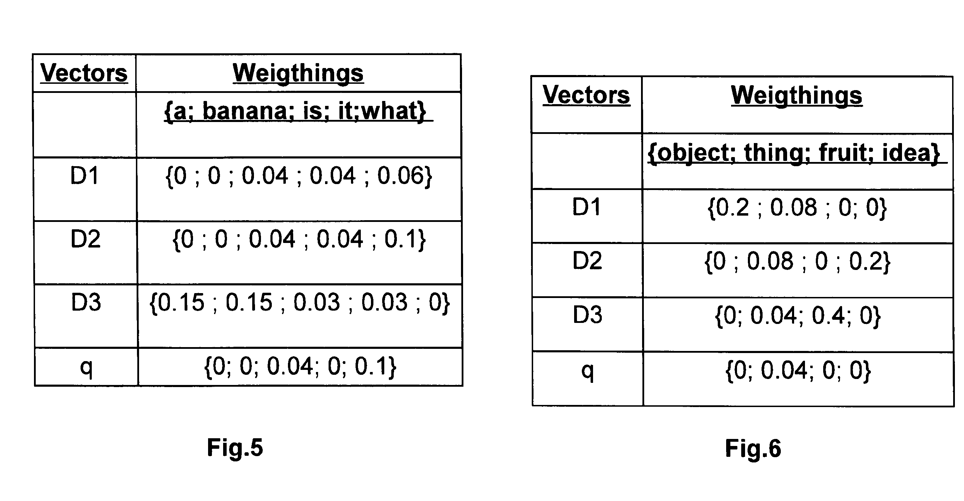

These weightings are given in fig.5. The first column represents the vectors (the different documents D1, D2 and D3 and the query q). The second column represents the weightings given to the different terms in the space of the indexes based on the textual content which comprises respectively a; banana; is; it; what. The different weightings are established based on the tf-idf technique. For example the weighting corresponding to the index "a" for the document D1 is 0 because "a" does not appear in the document D1 and the weighting corresponding to the index "what" for the document D2 is 0.1.

In the same way, weightings computed in the space of the indexes associated with the social bookmarks are represented in fig.6. The first column represents the vectors (the different documents D1, D2 and D3 and the query q). The second column represents the weightings computed by the tf-idf technique for the different terms in the space of the indexes based on the social bookmarks which comprises respectively object; thing; fruit; idea.

The value of the weightings given in fig.5 anf fig.6 are only exemplary values.

Based on these weightings defining vectors, the similarity parameters can be computed in each space.

In the space of the indexes based on the textual content, the length of the different vectors is computed.

The length of the vector D1 is given by

$$|D1| = \sqrt{0.04^2 + 0.04^2 + 0.06^2} = 0.083$$ In the same way, the length of the other vectors are computed and the obtained values are:

$$|D2| = 0.114; |D3| = 0.216; |q| = 0.107$$

The dot product between the vector representing the query and each of the vectors representing the documents D1, D2 and D3 is also computed. The dot product between D1 and q is given by $D1 \cdot q = 0.04*0.04+0.06*0.1 = 0.076$

Accordingly, $D2 \cdot q = 0,0116$; $D3 \cdot q = 0,006$

The similarity parameters, corresponding to the cosine between the vector representing the query and each of the vectors representing the documents can then be computed. The similarity parameter $Si_{tc}$ (for similarity parameter based on the textual content) for the document D 1 is computed from the equation [1] and given by

$$SI_{tc}(D1) = \cos(D1, q) = \frac{D1 \cdot q}{|D1| * |q|} = \frac{0.0076}{0.083 * 0.107} = 0.850$$

In the same way the similarity parameters $SI_{tc}$ for the other documents are computed: $SI_{tc}(D2) = \cos(D2, q) = 0.950$; $SI_{tc}(D3) = \cos(D3, q) = 0.259$

These similarity parameters enable to establish a pre- ranking of the documents based on their textual content.

The same computations are also applied in the space of the indexes based on the social bookmarks, to determine the similarity parameters between the vector corresponding to the query and each of the vectors representing the documents.

The length of the vector D1 is given by $|D1| = \sqrt{0.2^2 + 0.08^2} = 0.215$

In the same way, the length of the other vectors are computed and the obtained values are:

$$|D2|=0.215\,;|D3|=0.401\,;|q|=0.04$$

The dot product between the vector representing the query and each of the vectors representing the documents D 1, D2 and D3 is also computed. The dot product between D 1 and q is given by $D1\cdot q=0.08*0.04=0.0032$
Accordingly, $D2\cdot q=0{,}0032$; $D3\cdot q=0{,}0016$

The similarity parameters, corresponding to the cosine between the vector representing the query and each of the vectors representing the documents can then be computed. The similarity parameter $Si_{sb}$ (for similarity parameter based on the social bookmarks) for the document D 1 is given by

$$SI_{sb}(D1)=\cos(D1,q)=\frac{D1\cdot q}{|D1|*|q|}=\frac{0.0032}{0.215*0.04}=0.372$$

In the same way the similarity parameters $SI_{sb}$ for the other documents are computed:

$$SI_{sb}(D2)=\cos(D2,q)=0.372\,;SI_{sb}(D3)=\cos(D3,q)=0.099$$

These similarity parameters enable to establish another pre-ranking of the documents based on their social bookmarks.
In order to perform a global ranking, both pre-ranking are combined according to a weighted Borda-Fuse equation [2]. The parameter $\gamma$ in equation [2] enables to establish the relative contribution that are assigned to the pre-ranking based on the social bookmark with respect to the pre-ranking based on the textual content. If $\gamma$ is set to 0, only the pre-ranking based on the social bookmarks is taken into account, if $\gamma$ is set to 0.5, both pre-rankings are equally taken into account and if $\gamma$ is set to 1, only the pre-ranking based on the textual content is taken into account. In the present case, an equal contribution for both pre-rankings is chosen, the weighting parameter $\gamma$ in equation [2] is set to 0.5 and the global similarity parameters SIg for the document D 1 is given by:

$$SI_g(D1,q)=0.5*0.850+0.5*0.372=0.611$$

The weighting parameter $\gamma$ may be either configured during the implementation of the search engine or set by the user of the user equipment having sent the query.
Accordingly, the global similarity parameters $Si_g$ of the other documents are computed and given by

$$SI_g(D2,q)=0.661\,;SI_g(D3,q)=0.179$$

A ranking can then be established with the first rank being given to the document or item having the highest global similarity parameter, document D2 in the present case, then document D1 in the second rank and document D3 in the third rank.
As a consequence, the results of the research associated with the query will be displayed on the user equipment of the user having sent the query so that document D2 will appear in the first rank, document D1 in the second rank and document D3 in the third rank.
Thus, the embodiments of the present invention by indexing, weighting and ranking independently the documents on one side based on their textual content and on the other side based on associated social bookmarks and by combining both rankings enable to enhance the representation of an item to build a more meaningful indexing that improve the quality of the items retrieval and ranking. Furthermore, such method does not increase the computation complexity allowing therefore an easy implementation. The information added by any user of the communication network are therefore taking into account in order to optimize the functioning of the search engine.

**Claims**

1. A computer-implemented method for retrieving and ranking indexed items of a communication network based on a query implemented in a server system having one or more processor and data repository, the said method comprising the following steps:

   - receiving, from a user equipment (4) connected to the communication network, a query comprising at least one term (105),
   - retrieving items stored in a data repository (1) of the server system that are indexed based on their textual contents and having at least one index corresponding to the at least one term of the query (109),
   - weighting the retrieved items by taking into account a number of occurrences of the at least one term of the query in the retrieved items (110),

   wherein the retrieving and weighting steps of the method also comprise:

   - retrieving items stored in a data repository (1) of the server system that are indexed based on at least one social bookmark associated to the said items and having at least one index corresponding to the at least one term of the query (109),
   - weighting the at least one social bookmark associated with a retrieved item by taking into account a number of occurrences of the at least one term of the query in the at least one social bookmark (110) and,
   - ranking the retrieved items based on a combination of both weighting steps (111).

2. Method in accordance with claim 1 wherein the at least one social bookmark associated with an item refers to at least one term which is associated to the item by a user of the communication network.

3. Method in accordance with claim 2 wherein the at least one social bookmark is a folksonomy.

4. Method in accordance with one of the previous claims wherein it comprises a preliminary step (103) of indexing items of a communication network, the said preliminary step comprising a first and a second independent indexings wherein the first indexing refers to an indexing of the items based on their textual contents and the second indexing refer to an indexing of the items based on the social bookmarks associated with the items.

5. Method in accordance with one of the previous claims wherein it comprises an additional step (107) of enrichment of the query after the step of reception of a query wherein additional terms corresponding to terms having a spelling close to the spelling of the at least one term of the initial query or terms that are synonyms with the at least on term of the initial query are added to the query.

6. Method in accordance with one of the previous claims wherein the weighting step (110) is performed using a vectorial space model wherein the query and the indexed items are represented by vectors.

7. Method in accordance with claim 6 wherein the vectors of the vectorial space model are determined by a term-frequency, inverse item frequency "tf-idf" technique.

8. Method in accordance with claim 6 or 7 wherein the step (111) of ranking comprises the establishment of a first and a second pre-rankings of the retrieved items according respectively to the weighting based on the items indexed by their textual content and to the weighting based on the social bookmarks, the said first and second pre-rankings comprising the computation, for the items, of an similarity parameter between the query and an indexed item, the said similarity parameter corresponding to the cosine between the vector representing the query and a vector representing the indexed item.

9. Method in accordance with claim 8 wherein the step of ranking comprises the computation of a global similarity parameter based on the similarity parameters computed during the first and the second pre-rankings using a weighted Borda-Fuse equation.

10. Method in accordance with one of the previous claims wherein the communication network is the Internet and wherein an item refers to a web page.

11. Server system of a communication network comprising

- an index repository (9) for storing indexes associated with items of the communication network,
- a user interface (11) configured for receiving a query comprising at least one term from a user equipment (4) of the communication network,
- processing means configured to perform the steps of:

- browsing the index repository (108) and retrieving the indexed items having at least one index corresponding to at least one term of the query (109),
- weighting the retrieved items by taking into account a number of occurrences of the at least one term of the query in the said retrieved items (110),

wherein the index repository (108) comprises two types of indexing, a first indexing based on the textual contents of the items and a second indexing based on social bookmarks associated with the items and wherein the processing means are configured for:

- browsing the index repository (108) and retrieving the indexed items having at least one index corresponding to the at least one term of the query according to the first and the second indexing (109),
- weighting the items retrieved by the first indexing by taking into account a number of occurrences of the at least one term of the query in the items retrieved by the first indexing (110),
- weighting the items retrieved by the second indexing by taking into account a number of occurrences of the at least one term of the query in the social bookmarks associated with the items retrieved by the second indexing (110),
- ranking the retrieved items based on a combination of both weightings (111).

**12.** Server system in accordance with claim 11 wherein the user interface (11) is also configured for transmitting the ranking of the retrieved items to the user equipment (4) having sent the query.

**13.** Server system in accordance with claim 11 or 12 wherein the processing means are also configured to perform the steps of:

- indexing items of the communication network based on their textual contents in the index repository (9) (103),
- indexing items of the communication network based on the social bookmarks associated with the said items in the index repository (9) (103).

**Amended claims in accordance with Rule 137(2) EPC.**

**1.** A computer-implemented method for retrieving and ranking indexed items of a communication network based on a query implemented in a server system having one or more processor and data repository, the said method comprising the following steps:

- receiving, from a user equipment (4) connected to the communication network, a query comprising at least one term (105),
- retrieving items stored in a data repository (1) of the server system that are indexed based on their textual contents and having at least one index corresponding to the at least one term of the query (109),
- weighting the retrieved items by taking into account a number of occurrences of the at least one term of the query in the retrieved items (110),

wherein the retrieving and weighting steps of the method also comprise:

- retrieving items stored in a data repository (1) of the server system that are indexed based on at least one social bookmark associated to the said items and having at least one index corresponding to the at least one term of the query (109),
- weighting the at least one social bookmark associated with a retrieved item by taking into account a number of occurrences of the at least one term of the query in the at least one social bookmark (110) and,
- ranking the retrieved items based on a combination of both weighting steps (111), **characterized in that** it also comprises an additional step (107) of enrichment of the query after the step of reception of a query wherein additional terms corresponding to terms having a spelling close to the spelling of the at least one term of the initial query or terms that are synonyms with the at least one term of the initial query are added to the query.

**2.** Method in accordance with claim 1 wherein the at least one social bookmark associated with an item refers to at least one term which is associated to the item by a user of the communication network.

**3.** Method in accordance with claim 2 wherein the at least one social bookmark is a folksonomy.

**4.** Method in accordance with one of the previous claims wherein it comprises a preliminary step (103) of indexing items of a communication network, the said preliminary step comprising a first and a second independent indexings wherein the first indexing refers to an indexing of the items based on their textual contents and the second indexing refer to an indexing of the items based on the social bookmarks associated with the items.

**5.** Method in accordance with one of the previous claims wherein the weighting step (110) is performed using a vectorial space model wherein the query and the indexed items are represented by vectors.

**6.** Method in accordance with claim 5 wherein the vectors of the vectorial space model are determined by a term-frequency, inverse item frequency "tf-idf" technique.

**7.** Method in accordance with claim 5 or 6 wherein the step (111) of ranking comprises the establishment of a first and a second pre-rankings of the retrieved items according respectively to the weighting based on the items indexed by their textual content and to the weighting based on the social bookmarks, the said first and second pre-rankings comprising the computation, for the items, of an similarity parameter between the query and an indexed item, the said similarity parameter corresponding to the cosine between the vector representing the query and a vector representing the indexed item.

**8.** Method in accordance with claim 7 wherein the step of ranking comprises the computation of a global similarity parameter based on the similarity parameters computed during the first and the second pre-rankings using a weighted Borda-Fuse equation.

**9.** Method in accordance with one of the previous claims wherein the communication network is the Internet and wherein an item refers to a web page.

**10.** Server system of a communication network comprising

- an index repository (9) for storing indexes associated with items of the communication network,
- a user interface (11) configured for receiving a query comprising at least one term from a user equipment (4) of the communication network,
- processing means configured to perform the steps of:

- browsing the index repository (108) and retrieving the indexed items having at least one index corresponding to at least one term of the query (109),
- weighting the retrieved items by taking into account a number of occurrences of the at least one term of the query in the said retrieved items (110),

wherein the index repository (108) comprises two types of indexing, a first indexing based on the textual contents of the items and a second indexing based on social bookmarks associated with the items and wherein the processing means are configured for:

- browsing the index repository (108) and retrieving the indexed items having at least one index corresponding to the at least one term of the query according to the first and the second indexing (109),
- weighting the items retrieved by the first indexing by taking into account a number of occurrences of the at least one term of the query in the items retrieved by the first indexing (110),
- weighting the items retrieved by the second indexing by taking into account a number of occurrences of the at least one term of the query in the social bookmarks associated with the items retrieved by the second indexing (110),
- ranking the retrieved items based on a combination of both weightings (111)

**characterized in that** the processing means are also configured for adding an enrichment of the query received form the user interface wherein additional terms corresponding to terms having a spelling close to the spelling of the at least one term of the initial query or terms that are synonyms with the at least one term of the initial query are added to the query.

**11.** Server system in accordance with claim 10 wherein the user interface (11) is also configured for transmitting the ranking of the retrieved items to the user equipment (4) having sent the query.

**12.** Server system in accordance with claim 10 or 11 wherein the processing means are also configured to perform the steps of:

- indexing items of the communication network based on their textual contents in the index repository (9) (103),
- indexing items of the communication network based on the social bookmarks associated with the said items in the index repository (9) (103).

Fig.1

Fig.2

EP 2 650 801 A1

| Indexes | Items |
|---------|-------|
| a | {D3} |
| banana | {D3} |
| is | {D1, D2, D3} |
| it | {D1, D2, D3} |
| what | {D1, D2} |

**Fig.3**

| Indexes | Items |
|---------|-------|
| object | {D1} |
| thing | {D1, D2, D3} |
| fruit | {D3} |
| idea | {D2} |

**Fig.4**

EP 2 650 801 A1

| Vectors | Weigthings {object; thing; fruit; idea} |
|---|---|
| D1 | {0.2 ; 0.08 ; 0 ; 0} |
| D2 | {0 ; 0.08 ; 0 ; 0.2} |
| D3 | {0; 0.04; 0.4; 0} |
| q | {0; 0.04; 0; 0} |

Fig.6

| Vectors | Weigthings {a; banana; is; it;what} |
|---|---|
| D1 | {0 ; 0 ; 0.04 ; 0.04 ; 0.06} |
| D2 | {0 ; 0 ; 0.04 ; 0.04 ; 0.1} |
| D3 | {0.15 ; 0.15 ; 0.03 ; 0.03 ; 0} |
| q | {0; 0; 0.04; 0; 0.1} |

Fig.5

Europäisches
Patentamt

European
Patent Office

Office européen
des brevets

**EUROPEAN SEARCH REPORT**

Application Number

EP 12 29 0130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAO S ET AL: "Optimizing web search using social annotations", 16TH INTERNATIONAL WORLD WIDE WEB CONFERENCE, WWW2007 - BANFF, ALBERTA, CANADA, ASSOCIATION FOR COMPUTING MACHINERY US , 8 May 2007 (2007-05-08), pages 501-510, XP002539081, ISBN: 978-1-59593-654-7 Retrieved from the Internet: URL:http://www2007.org/papers/paper397.pdf [retrieved on 2007-05-12] * page 501 - page 504 * * page 509 * ----- | 1-13 | INV. G06F17/30 |
| X | CHOOCHAIWATTANA W ET AL: "Applying Social Annotations to Retrieve and Re-rank Web Resources", INFORMATION MANAGEMENT AND ENGINEERING, 2009. ICIME '09. INTERNATIONAL CONFERENCE ON, IEEE, PISCATAWAY, NJ, USA, 3 April 2009 (2009-04-03), pages 215-219, XP031476686, ISBN: 978-0-7695-3595-1 * page 215 - page 218 * ----- | 1-13 | TECHNICAL FIELDS SEARCHED (IPC) G06F |
| X | JOMSRI P ET AL: "Improving research paper searching with social tagging - A preliminary investigation", NATURAL LANGUAGE PROCESSING, 2009. SNLP '09. EIGHTH INTERNATIONAL SYMPOSIUM ON, IEEE, PISCATAWAY, NJ, USA, 20 October 2009 (2009-10-20), pages 152-156, XP031571018, ISBN: 978-1-4244-4138-9 * page 152 - page 154 * ----- | 1-13 | |

The present search report has been drawn up for all claims

| Place of search | Date of completion of the search | Examiner |
|---|---|---|
| The Hague | 31 August 2012 | Hackelbusch, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)